# EUROPÄISCHE PATENTSCHRIFT

(11) **EP 2 130 722 B1**
(45) Veröffentlichungstag und Bekanntmachung des Hinweises auf die Patenterteilung: **20.07.2011**
(21) Anmeldenummer: 09007009.5
(22) Anmeldetag: 26.05.2009
(51) Int. Cl.: B60R 9/04, B62D 65/16, F16B 5/02, F16B 43/02

(54) **Toleranzausgleichselement**
Tolerance compensation element
Elément d'équilibrage de tolérance

(30) Priorität: 02.06.2008 DE 102008026414
(43) Veröffentlichungstag der Anmeldung: 09.12.2009
(73) Patentinhaber: Böllhoff Verbindungstechnik GmbH, 33649 Bielefeld (DE)
(72) Erfinder: Figge, Hans-Ulrich, 33758 Schloß-Holte (DE); Burger, Ingo, 33758 Schloß-Holte (DE); Dembowsky, Hans-Joachim, 21035 Hamburg (DE)
(74) Vertreter: Heyer, Volker

(56) Entgegenhaltungen:
- EP-A- 0 534 001
- AU-B- 561 612
- DE-A1- 4 240 079

## Beschreibung

### 1. Gebiet der Ereindung

Die vorliegende Erfindung betrifft ein Toleranzausgleichselement zur Befestigung von Anbauteilen, insbesondere Dachleisten, sowie ein Befestigungsverfahren für derartige Anbauteile mit Hilfe des Toleranzausgleichselements.

### 2. Hintergrund der Erfindung

Im Stand der Technik sind Toleranzausgleichselemente bekannt, die in unterschiedlichen technischen Gebieten eingesetzt werden. Ein Beispiel für ein Toleranzausgleichselement zur Befestigung von Anbauteilen im Kraftfahrzeug geht aus dem deutschen Patent 103 54 117 B4 hervor. Dieses Toleranzausgleichselement besteht aus einem hohlzylindrischen Verstellelement, das in ein hohlzylindrisches Basiselement geschraubt wird. Über die Tiefe des Einschraubens des hohlzylindrischen Verstellelements in das Basiselement werden die Toleranzen zwischen zwei beabstandeten Bauteilen ausgeglichen. Nach Ausgleich der Toleranzen stützt sich ein am Verstellelement umlaufender fester Kragen an dem einen Bauteil ab, während sich die abgewandte Stirnseite des Basiselements an dem anderen Bauteil abstützt. Dies führt häufig zu Ausbeulungen an einem der beiden Bauteile, falls die Länge des Toleranzausgleichselements nicht genau eingestellt ist. Zur vollständigen Befestigung des Toleranzausgleichselements an den beiden Bauteilen wird ein Gewindebolzen das Toleranzausgleichselement durchlaufend beispielsweise an einer Dachleiste befestigt. AU-A-14059183 beschreibt ein Toteranzausgleichselement, das sich aus einem Gewindebolzen mit Mutter zusammensetzt. Auf diesem Gewindebolzen ist eine Mehrzahl von unterschiedlich ausgebildeten Scheiben angeordnet, die einen Abstand von zwei aneinander zu befestigenden Teilen ausgleicht.

DE 42 40 079 A1 beschreibt eine Befestigungsanordnung von Stützfüßen einer Dachreling auf einem Fahrzeugdach. Zudem kann diese Befestigungsanordnung zum Befestigen von Querstäben an den Holmen einer Dachreling eingesetzt werden. Zum Ausgleich von Toleranzen ist ein zweiteiliges Befestigungselement vorgesehen, das aus einer Schraube mit einem mit Außengewinde versehenen Schaft und einem gegenüber diesem verdicktem Kopf sowie aus einer mit Innengewinde versehenen Mutter besteht. Des Weiteren sind der Schraubenkopf und die Mutter kugelförmig ausgebildet.

EP 0 534 001 A1 beschreibt eine Schraubverbindung zum Verbinden von zwei beabstandeten Bauteilen, beispielsweise Blechen, mit einer Schraube, deren Kopf an der Außenseite des einen Bauteils anliegt, einer ersten Mutter, die an der Außenseite des zweiten Bauteils zur Anlage kommt. Eine Abstandshülse weist ein Außengewinde auf und ist in eine zweite Mutter einschraubbar, die auf der dem Schraubenkopf gegenüberliegenden Seite des ersten Bauteils angebracht ist. Die Schraube weist einen vorderen Gewindeabschnitt auf, dessen Spitzendurchmesser größer ist als der Durchmesser eines gewindelosen Schaftabschnitts. Die Abstandshülse weist einen Innengewindeabschnitt auf, dessen Kerndurchmesser gleich oder größer ist als der Durchmesser des gewindelosen Schaftabschnitts. Der Gewindeabschnitt der Abstandshülse ist vor dem Einschraubvorgang mit dem Gewindeabschnitt der Schraube so in kraftschlüssigem Eingriff, dass die Abstandshülse mit einem ausreichenden Moment in die zweite Mutter eingeschraubt werden kann. Dieser Eingriff löst sich bei einem höheren Drehmoment.

Es ist die Aufgabe vorliegender Erfindung, ein Toleranzausgleichselement zur Befestigung von Anbauteilen sowie ein entsprechendes Befestigungsverfahren bereitzustellen, mit dem auf einfache Weise und ohne Verformungen der Bauteile eine Befestigung von Anbauteilen beispielsweise im Kraftfahrzeug möglich ist.

### 3. Zusammenfassung der Erfindung

Die oben genannte Aufgabe wird durch ein Toleranzausgleichselement zur Befestigung von Anbauteilen gemäß dem unabhängigen Patentanspruch 1 sowie durch ein Befestigungsverfahren für ein Anbauteil gemäß dem unabhängigen Patentanspruch 7 gelöst. Vorteilhafte Ausgestaltungen und Weiterentwicklungen vorliegender Erfindungen gehen aus der Beschreibung, den begleitenden Zeichnungen und den anhängenden Patentansprüchen hervor.

Das erfindungsgemäße Toleranzausgleichselement zur Befestigung von Anbauteilen, insbesondere Dachleisten, weist die folgenden Merkmale auf: ein hohlzylindrisches Verstellelement mit einem Außengewinde an seiner Außenseite, ein hohlzylindrisches Basiselement mit einem Innengewinde, in dass das Verstellelement einschraubbar ist, so dass Toleranzen in Längsrichtung des Toleranzausgleichselements ausgleichbar sind, und ein ringförmiges Aufsatzelement, das radial verschiebbar an einer Stirnseite des hohlzylindrischen Basiselements anliegt, so dass aufgrund der Formgebung des Aufsatzelements und/oder der Stirnseite des hohlzylindrischen Basiselements eine winklige Ausrichtung zwischen den Mittelachsen von Basis- und Aufsatzelement einstellbar ist.

Mit Hilfe des Toleranzausgleichselements werden Toleranzen zwischen zwei Bauteilen in Längsrichtung des Toleranzausgleichs durch ein miteinander Verschrauben des hohlzylindrischen Verstellelements und des hohlzylindrischen Basiselements ausgeglichen. Es ist jedoch häufig der Fall, dass die beiden Bauteile, zwischen denen Toleranzen ausgeglichen werden sollen, nicht parallel zueinander ausgerichtet sind. Zu diesem Zweck weist das Toleranzausgleichselement an einer seiner Stirnseiten, die beispielsweise dem zweiten Bauteil zugewandt ist, ein ringförmiges Aufsatzelement auf. Dieses ringförmige Aufsatzelement ist derart konstruiert, dass es sich trotz seiner Befestigung am Toleranzausgleichselement in radialer Richtung bezogen auf seine Mittelachse verschieben lässt. Aufgrund der Formgebung der aneinander anliegenden Stirnseiten des Aufsatzelements und des hohlzylindrischen Basiselements führt das radiale Verschieben des ringförmigen Aufsatzelements dazu, dass die an entgegengesetzten Enden des Toleranzausgleichselements befindlichen Stirnseiten nicht mehr parallel, sondern winklig zueinander ausgerichtet sind. Diese winklige Anordnung kann derart eingestellt werden, dass trotz nicht paralleler sich gegenüberliegender Bauteile die Stirnseiten jeweils vollständig an dem angrenzenden Bauteil anliegen. Auf diese Weise wird ein optimales Abstützen des Toleranzausgleichselements an beiden Bauteilen gewährleistet und ein Befestigen eines Anbauteils mit Hilfe des Toleranzausgleichselements an den beiden Bauteilen vorteilhaft unterstützt.

In einer bevorzugten Ausführungsform des Toleranzausgleichselements umfasst die Stirnseite des hohlzylindrischen Basiselements einen ringförmigen Abschnitt einer Kugelpfanne und das ringförmige Aufsatzelement ein daran angepasstes ringförmiges Kugelsegment. Der ringförmige Abschnitt der Kugelpfanne und das ringförmige Kugelsegment liegen innerhalb des Toleranzsaugleichselements aneinander an. Wird nun das ringförmige Aufsatzelement in radialer Richtung bezogen auf die Längsachse des Toleranzausgleichselements verschoben, wird das ringförmige Aufsatzelement nicht nur in seitlicher Richtung bezogen auf die Längsachse des Toleranzausgleichselements versetzt, sondern auch bezogen auf die Längsachse des Toleranzausgleichselements verkippt. Die Stärke des Verkippens wird durch die Neigung des ringförmigen Abschnitts der Kugelpfanne und des daran angepassten ringförmigen Kugelsegments vorgegeben. Es folgt somit aus dem radialen Versatz des ringförmigen Aufsatzelements bezogen auf die Längsachse des Toleranzausgleichselements, dass die Mittelachse des ringförmigen Aufsatzelements winklig zur Längsachse des Toleranzausgleichselements angeordnet ist.

Zur Realisierung oben beschriebener Konstruktion umfasst das Toleranzausgleichselement vorzugsweise ein Verbindungsstück am hohlzylindrischen Basiselement, mit dem das Auf satzelement verschiebbar befestigt ist. Es ist ebenfalls bevorzugt, dass das Verbindungsstück mittels Presssitz innerhalb des Basiselements befestigbar ist und über zumindest zwei abgewinkelte Haltearme das Aufsatzelement schwimmend am hohlzylindrischen Basiselement hält. Die Haltearme sind gemäß einer weiteren Ausführungsform in Aussparungen des Auf satzelements angeordnet, deren laterale Ausdehnung größer als die der Haltearme ist. Auf diese Weise wird das Aufsatzelement verliersicher am Toleranzausgleichselement gehalten, während gleichzeitig ein Abgleiten der aneinander anliegenden und winklig ausgerichteten Stirnseiten von Aufsatzelement und Basiselement gewährleistet ist.

Gemäß einer weiteren Ausgestaltung vorliegender Erfindung ist an dem hohlzylindrischen Verstellelement eine umlaufende Nut vorgesehen, in der eine federnde Anlagescheibe einrastbar ist, die bei Anlage an einem Bauteil federnd nachgibt. Diese Konstruktion erleichtert die Anpassung des Toleranzausgleichselements an einen Abstand zwischen zwei gegenüberliegenden Bauteilen, ohne dass eines dieser Bauteile durch zu starken Druck des Toleranzausgleichselements ausgebeult wird. Ist die Länge des Toleranzausgleichselements beispielsweise etwas zu lang eingestellt, wird der Druck des Toleranzausgleichselements über die federnde Anlagescheibe auf das eine Bauteil übertragen. Diese federnde Anlagescheibe gibt dem zu großen Druck auf das zweite Bauteil federnd nach, so dass sich die eingestellte Überlänge des Toleranzausgleichselements nicht durch eine Ausbeulung am zweiten Bauteil zeigt.

Die vorliegende Erfindung umfasst ebenfalls ein Befestigungsverfahren für ein Anbauteil, insbesondere eine Dachleiste, mit Hilfe des oben beschriebenen Toleranzausgleichselements. Dieses Befestigungsverfahren weist die folgenden Schritte auf: Anordnen des Toleranzausgleichselements zwischen einem ersten und einem zweiten Bauteil, Anpassen der Länge des Toleranzausgleichselements mittels Ein- oder Ausschrauben des Verstellelements aus dem Basiselement an den Abstand zwischen dem ersten und dem zweiten Bauteil, Anpassen der am ersten und zweiten Bauteil jeweils anliegenden Stirnseiten des Toleranzausgleichselements an eine Ausrichtung der sich gegenüberliegenden Flächen beider Bauteile zueinander durch radiales Verschieben des Aufsatzelements entlang der dem Aufsatzelement zugewandten Stirnseite des Basiselements und Befestigen des Anbauteils mit Hilfe eines das Toleranzausgleichselement durchlaufenden Befestigungsbolzens an dem ersten und zweiten Bauteil.

Unter Ausnutzung der konstruktiven Besonderheiten des oben beschriebenen Toleranzausgleichselements ist es möglich, ein Anbauteil an zwei Bauteilen zu befestigen, die nicht notwendigerweise parallel zueinander angeordnet sind. Das Toleranzausgleichselement ermöglicht das Anpassen der Stirnseiten des Toleranzausgleichselements an diese winklige Ausrichtung dieser beiden Bauteile zueinander, so dass die beiden Stirnseiten des Toleranzausgleichselements sich optimal an den beiden Bauteilen abstützen.

Gemäß einer weiteren Ausgestaltung des Befestigungsverfahrens erfolgt ein Anpassen der Länge des Toleranzausgleichselements derart, dass die Anlagescheibe federnd vorgespannt am zweiten Bauteil anliegt, ohne das zweite Bauteil zu verformen.

### 4. Kurze Beschreibung der begleitenden Zeichnung

Die vorliegende Erfindung wird unter Bezugnahme auf die begleitende Zeichnung näher erläutert. Es zeigen:
- Fig. 1: eine Explosionsansicht einer bevorzugten Ausführungsfonn des Tole- ranzausgleichselement,
- Fig. 2: eine perspektivische Ansicht des Verstellelements mit Anlagescheibe aus Fig. 1,
- Fig. 3: eine perspektivische Ansicht des Basiselements mit Aufsatzelement aus Fig. 1,
- Fig. 4A bis C: Schnittansichten des Toleranzausgleichselements aus Fig. 1,
- Fig. 5A bis C: Schnittansichten des Toleranzausgleichselements aus Fig. 1,
- Fig. 6A, B: perspektivische Ansichten des Toleranzausgleichselements aus Fig. 1 mit unterschiedlichen Positionen des Aufsatzelements,
- Fig. 7A, B: perspektivische Ansichten des Toleranzausgleichselements aus Fig. 1 mit einem Werkzeug,
- Fig. 8, 9A, B, 10, 11: unterschiedliche Sequenzen des Einbaus des Toleranzausgleichsele- ments aus Fig. 1 mit Hilfe des Werkzeugs aus Fig. 7,
- Fig. 12: das Toleranzausgleichselement aus Fig. 1 in einer Anordnung mit zwei Bauteilen und Anbauteil und
- Fig. 13: das Toleranzausgleichselement in einer mit Hilfe eines Gewindebol- zens befestigten Anordnung zwischen zwei Bauteilen und mit Anbau- teil.

### 5. Detaillierte Beschreibung_bevorzugter Ausführungsformen

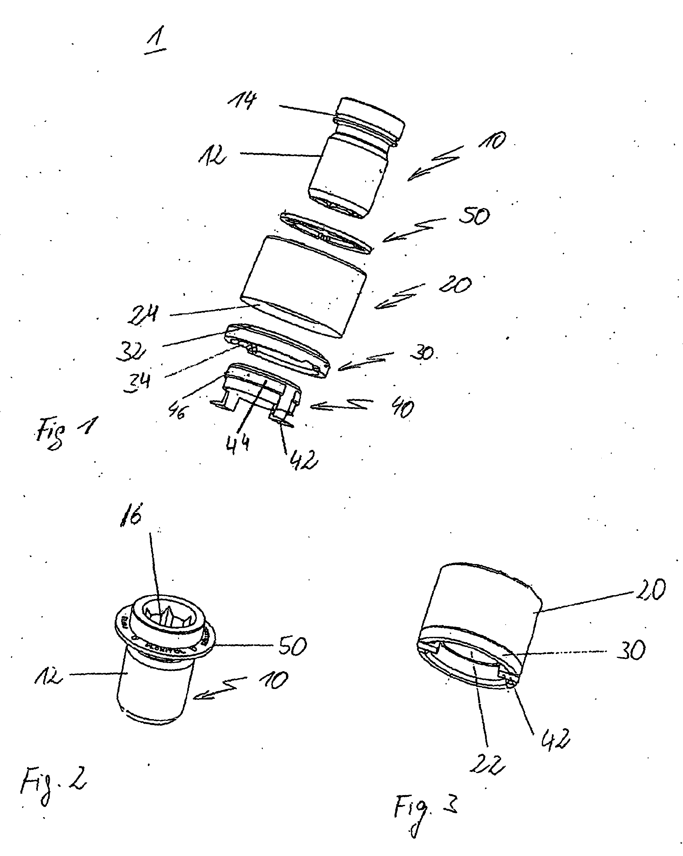

Eine bevorzugte Ausführungsform des Toleranzausgleichselements 1 ist in einer Explosionsansicht in Fig. 1 dargestellt. Ergänzend dazu zeigen die Figuren 2 und 3 perspektivische Ansichten des Verstellelements 10 mit federnder Anlagescheibe 50 und Basiselement 20 mit Aufsatzelement 30.

Das Toleranzausgleichselement 1 besteht aus einem hohlzylindrischen Verstellelement 10, einem hohlzylindrischen Basiselement 20 und einem ringförmigen Aufsatzelement 30. Das hohlzylindrische Verstellelement 10 umfasst an seiner Außenseite ein Außengewinde 12. Das Außengewinde 12 ist vorzugsweise als Rechtsgewinde ausgebildet. Dieses wirkt mit einem Innengewinde 22 an der Innenseite des hohlzylindrischen Basiselements 20 zusammen. Das Innengewinde 22 ist als Rechtsgewinde vorgesehen, obwohl es ebenfalls denkbar ist, dass Rechtsgewinde jeweils durch ein Linksgewinde zu ersetzen.

Das hohlzylindrische Verstellelement 10 umfasst zudem an seiner Innenseite ein Antriebsmittel 16, beispielsweise eine Vierkant- oder Sechskantkontur. Basierend auf dieser Konstruktion ist es mit Hilfe eines Werkzeugs 90 möglich, das Verstellelement 10 zu drehen, wie es unten näher erläutert ist. Außerdem ist das Verstellelement 10 mit einem Durchgang für einen Befestigungsbolzen B ausgestattet, um beispielsweise mit Hilfe des Toleranzausgleichselements 1 eine Dachleiste 80 im Kraftfahrzeug befestigen zu können.

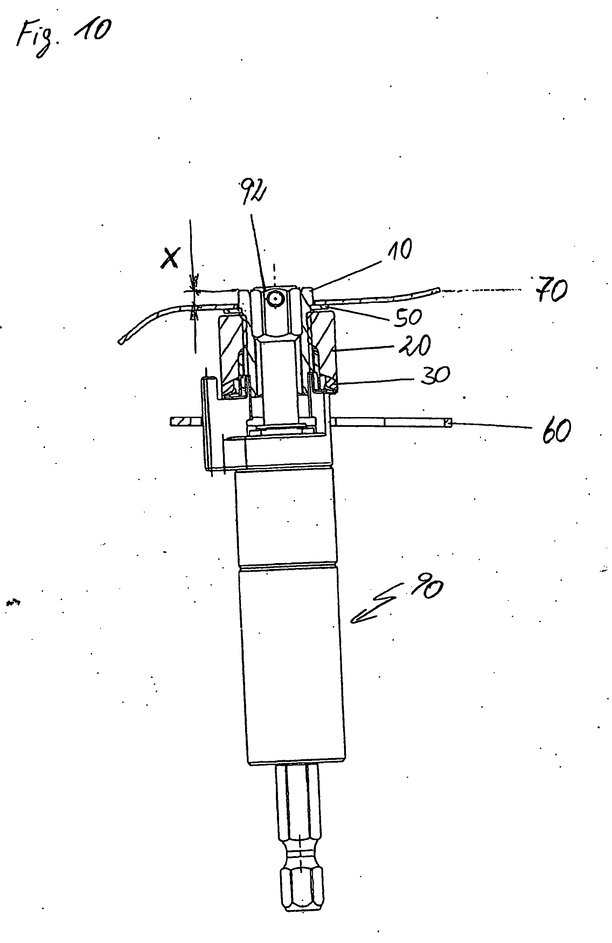

Gemäß einer Ausgestaltung der vorliegenden Erfindung umfasst das hohlzylindrische Verstellelement 10 an seiner Außenseite eine umlaufende Nut 14. Die Nut 14 dient der Aufnahme der Anlagescheibe 50. Der Innendurchmesser der Anlagescheibe 50 ist so groß ausgebildet, dass die Anlagescheibe 50 auf das Verstellelement 10 aufschiebbar und in der Nut 14 befestigbar ist. Der Außendurchmesser der Anlagescheibe 50 weist eine ausreichende Größe auf, um ein Abstützen der Anlagescheibe 50 an einem zweiten Bauteil 70 (vgl. Figuren 10 bis 13) gewährleisten zu können. Die Anlagescheibe 50 ist aus einem federnden Material hergestellt, so dass sie nach einem Einschnappen in die umlaufende Nut 14 in Längsrichtung des Toleranzausgleichselements 1 federnd nachgeben kann. Das Einschnappen in die Nut 14 wird durch Freimachungen 52 am inneren Rand der Anlagescheibe 50 ermöglicht, was ebenfalls durch die federnden Materialeigenschaften der Anlagescheibe 50 begünstigt wird. Die Bedeutung der Anlagescheibe 50 ist weiter unten näher erläutert.

Das hohlzylindrische Basiselement 20 weist das bereits oben erwähnte Innengewinde 22 auf. Aufgrund dieser Konstruktion kann das Verstellelement 10 in das Basiselement 20 hinein und aus diesem heraus geschraubt werden, um die passende oder gewünschte Länge des Toleranzausgleichselements 1 einzustellen. Das Verstellelement 10 und das Basiselement 20 sind vorzugsweise aus Stahl hergestellt. Es ist jedoch auch jeder andere Werkstoff geeignet, der eine ausreichende Stabilität des Toleranzausgleichselements 1 gewährleistet.

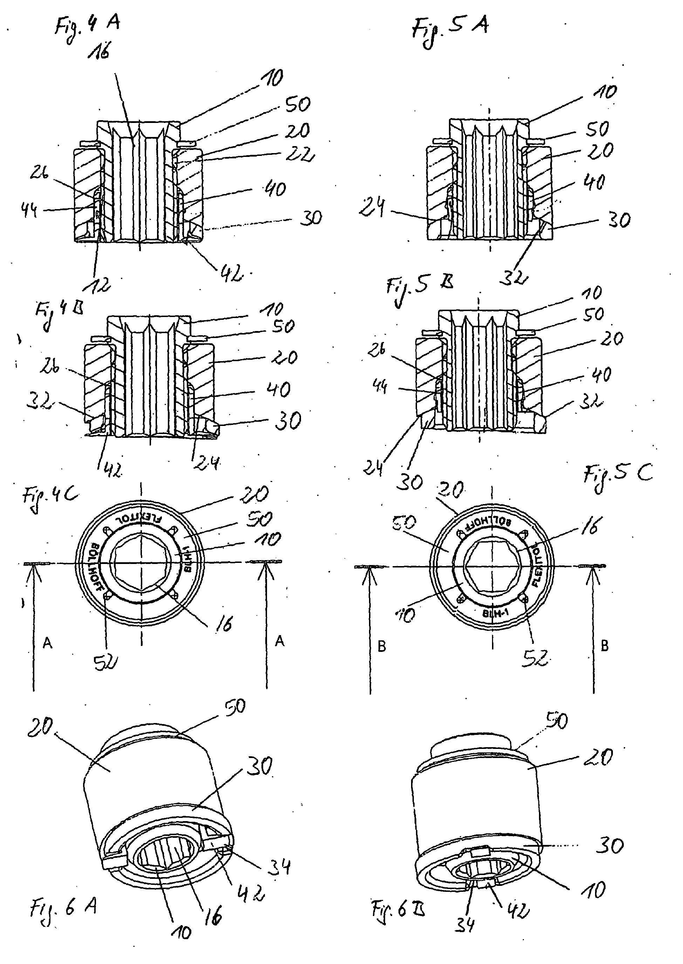

Die dem Verstellelement 10 abgewandte Stirnseite 24 des hohlzylindrischen Basiselements 20 wirkt mit einem ringförmigen Aufsatzelement 30 zusammen. Das ringförmige Aufsatzelement 30 liegt an der Stirnseite 24 des Basiselements 20 an und ist zudem in radialer Richtung verschiebbar. Dies wird durch ein Verbindungsstück 40 ermöglicht, dass das ringförmige Aufsatzelement 30 am Basiselement 20 hält. Zur Realisierung dieser Funktion umfasst das Verbindungsstück 40 vorzugsweise einen Ring 44, an dem mindestens zwei Haltearme 42 angeordnet sind. Der Ring 44 ist in seiner Größe an eine umfängliche Aussparung 26 an der Innenseite des Basiselements 20 nahe der Stirnseite 24 angepasst, so dass er durch Presssitz darin befestigbar ist (vlg. Figuren 4A, B). Zur Unterstützung des Presssitzes weist der Ring 44 vorzugsweise einen umlaufenden Hinterschnitt 46 auf. Das Verbindungsstück 40 wird als Spritzgussteil aus Kunststoff hergestellt. Hier sind ebenfalls andere Materialien geeignet, die einen verlässlichen Halt des Verbindungsstücks 40 und somit des Aufsatzelements 30 im bzw. am Basiselement 20 ermöglichen.

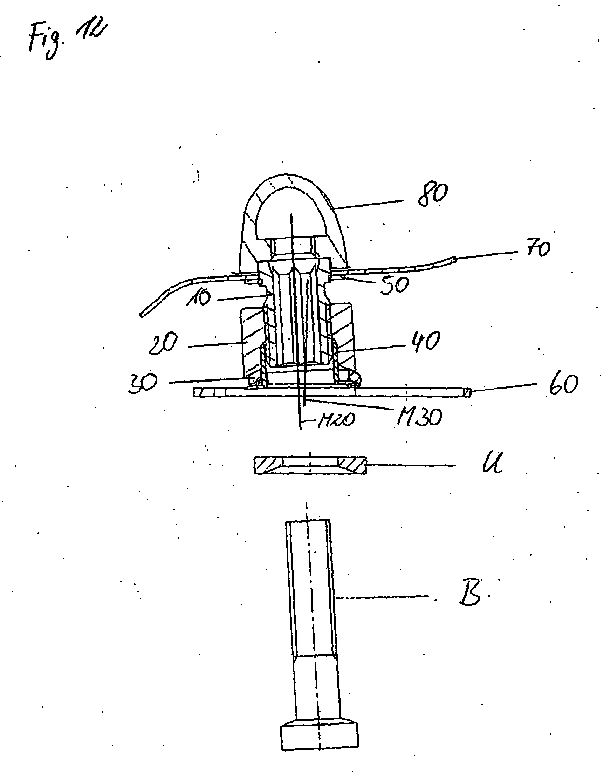

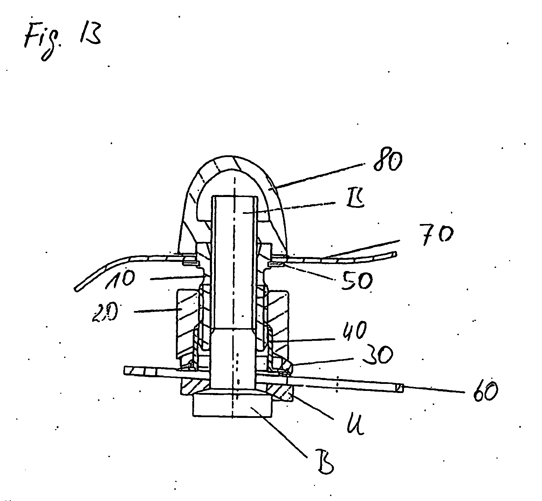

Die verschiebbare Anordnung des Aufsatzelements 30 an der Stirnseite 24 des Basiselements 20 gewährleistet ein vollständiges Anliegen des Aufsatzelements 30 an einem ersten Bauteil 60 und der Anlagescheibe 50 an einem zweiten Bauteil 70 (vgl. Fig. 13). Diese Anlage ist sichergestellt, auch wenn die sich gegenüberliegenden Flächen der Bauteil 60, 70 nicht parallel zueinander angeordnet sind. Um diese Funktion zu realisieren ist die Stirnseite 24 bevorzugt als ringförmiger Abschnitt einer Kugelpfanne ausgebildet. In komplementärer Ausbildung dazu weist die der Stirnseite 24 zugewandte Seite des ringförmigen Aufsatzelements 30 ein ringförmiges Kugelsegment 32 auf. Diese Formgestaltung gestattet ein Verschieben des ringförmigen Aufsatzelements 30 in radialer Richtung, während gleichzeitig die Anlage des Kugelsegments 32 an der Stirnseite 24 erhalten bleibt. Mit diesem radialen Verschieben des ringförmigen Aufsatzelements 30 ist auch ein Verkippen des ringförmigen Aufsatzelements 30 im Vergleich zum Basiselement 20 verbunden. Dies lässt sich damit erklären, dass sich das ringförmige Aufsatzelement 30 und das Basiselement 20 um einen gemeinsamen Mittelpunkt drehen, der durch den Radius von Kugelpfanne an der Stirnseite 24 und Kugelsegment 32 vorgegeben ist. Das radiale Verschieben des ringförmigen Aufsatzelements 30 im Vergleich zum Basiselement 20 führt dadurch ebenfalls zu einer parallelen oder winkligen Ausrichtung der jeweils in Längsrichtung verlaufenden Mittelachsen M20, M30 des ringförmigen Aufsatzelements 30 und des Basiselements 20 (s. Fig. 12).

Um einen sicheren Halt und ein verlässliches Verschieben des ringförmigen Aufsatzelements 30 zu gewährleisten, wird das ringförmige Aufsatzelement 30 durch die bevorzugt abgewinkelt ausgebildeten Haltearme 42 schwimmend am Basiselement 20 gehalten. Die Haltearme 42 sind in an sie angepassten Aussparungen 34 des ringförmigen Aufsatzelements 30 angeordnet. Wie man in den Figuren 6A und B erkennen kann, weisen die Aussparungen 34 eine größere laterale Ausdehnung als die der Haltearme 42 auf. Zudem ist der Abstand der Haltearme 42 voneinander geringer als der Innendurchmesser des ringförmigen Aufsatzelements 30, so dass das Aufsatzelement 30 ausreichend verschoben werden kann mit Bezug auf die in Längsrichtung verlaufende Mittelachse M20 des Basiselements 20.

Die Figuren 4A und B zeigen Schnittdarstellungen entlang der Linie A-A aus Fig. 4C. Die Figuren 5A und B zeigen Schnittdarstellungen entlang der Linie B-B aus Fig. 5C. In Fig. 4C verläuft der Schnitt durch die abgewinkelten Haltearme 42, die das ringförmige Aufsatzelement 30 schwimmend am Basiselement 20 halten. Zudem erkennt man, wie das ringförmige Aufsatzelement 30 durch Presssitz des Rings 44 in der Aussparung 26 gehalten ist. In Fig. 4A sind die in Längsrichtung verlaufenden Mittelachsen (nicht gezeigt) des ringförmigen Aufsatzelements 30 und des Basiselements 20 parallel zueinander angeordnet. In Fig. 4B ist das ringförmige Aufsatzelement 30 in radialer Richtung verschoben, so dass die oben genannten Mittelachsen eine nicht parallele, winklige Ausrichtung zueinander aufweisen. Die gleichen Situationen sind in den Figuren 5A und 5C dargestellt, bloß dass hier der Schnitt B-B nicht durch die Haltearme 43 verläuft. Daher ist in den Figuren 5A und 5C jeweils erkennbar, dass die Haltearme 42 vollständig in den Aussparungen 34 des ringförmigen Aufsatzelements 30 aufgenommen sind. Sie behindern daher nicht eine verkippte Anordnung des Aufsatzelements 30 bezogen auf das Basiselement 20, so dass sich das Aufsatzelement 30 vollständig auf dem ersten Bauteil 60 im installierten Zustand des Toleranzausgleichselements 1 abstützt.

Auch in den perspektivischen Ansichten der Figuren 6A und B ist die radial verschobene Anordnung des ringförmigen Aufsatzelements 30 und die Anordnung der Haltearme 42 in den Aussparungen 34 zu erkennen.

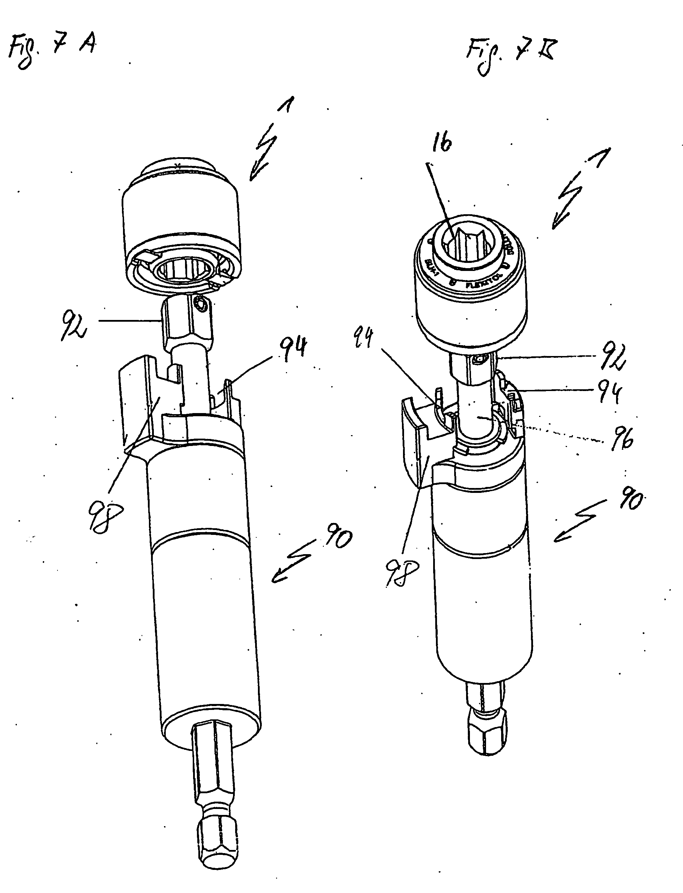

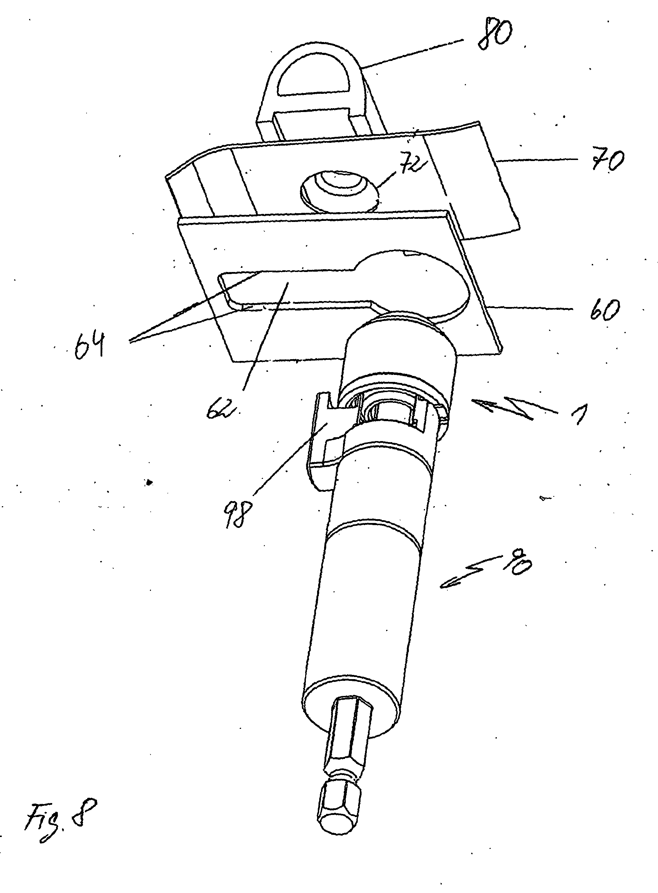

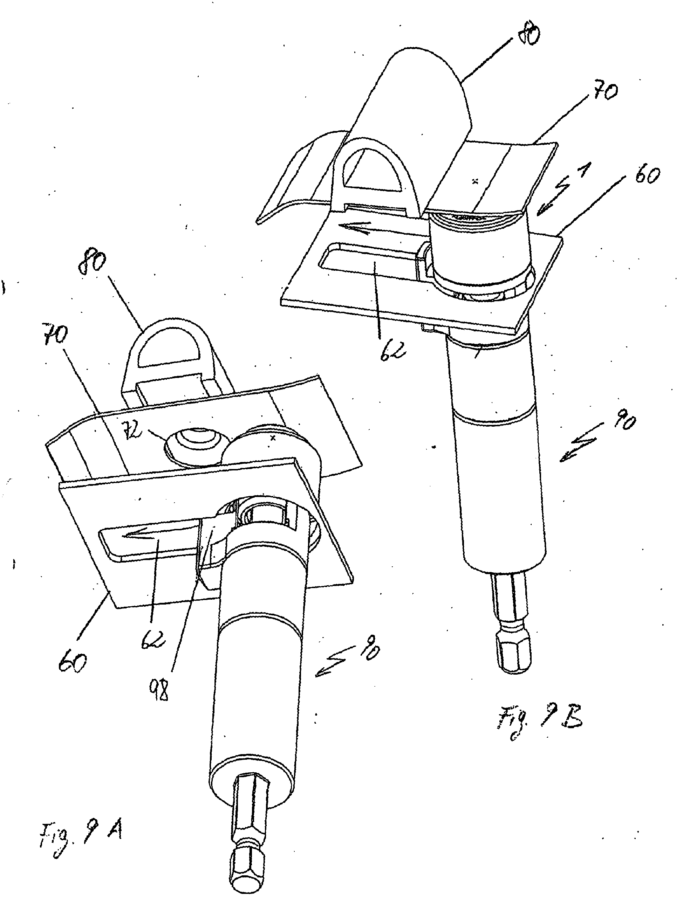

In den Figuren 7 bis 13 ist das Befestigungsverfahren für ein Anbauteil 80, insbesondere eine Dachleiste, bzw. die Installation des Toleranzausgleichselements 1 zwischen zwei Bauteilen 60, 70 dargestellt. Wie in den Figuren 7A und B in perspektivischer Ansicht zu erkennen ist, wird das Toleranzausgleichselement 1 mit Hilfe des Werkzeugs 90 installiert. Das Werkzeug 90 umfasst ein Antriebsmittel 92, beispielsweise einen Sechskant. Das Antriebsmittel 92 ist auf einer drehbaren Welle 96 des Werkzeugs 90 angeordnet. Es greift in das Antriebsmittel 16 des Verstellelements 10 ein, um das Verstellelement 10 zu verdrehen. Durch Drehen des Verstellelements 10 und gleichzeitiges Festhalten des Basiselements 20 wird die Länge des Toleranzausgleichselements 1 auf das gewünschte Maß eingestellt. Das Festhalten bzw. Sichern des Basiselements 20 gegen Verdrehen erfolgt bevorzugt über Taschen 94 des Werkzeugs 90, die die Haltearme 42 des Verbindungsstücks 40 umschließen. Nachdem das Verstellelement 10 auf das Werkzeug 90 aufgesteckt worden ist, wird das Toleranzausgleichselement 1 mit dem Werkzeug 90 durch ein Schlüsselloch 62 im ersten Bauteil 60, beispielsweise die innenliegende Traverse eines Kraftfahrzeugs, montiert. Um ein Mitdrehen des Basiselements 20 mit der Welle 96 des Werkzeugs 90 zu verhindern, stützen sich Führungsstege 98 des Werkzeugs 90 an den parallelen Flächen 64 des Schlüssellochs 62 ab. Auf diese Weise wird Verdrehsicherheit des Werkzeugs 90 und des Basiselements 20 mit Hilfe der Seitenflächen 64 des Schlüssellochs 62 und der Stege 98 sichergestellt.

Mit Hilfe des Werkzeugs 90 wird weiterhin das Verstellelement 10 des Toleranzausgleichselements 1 in ein Loch 72 im zweiten Bauteil 70, beispielsweise eine Dachhaut eines Kraftfahrzeugs, eingeführt. Das Toleranzausgleichselement 1 wird somit zwischen dem ersten 60 und dem zweiten Bauteil 70 angeordnet. Das Einsetzen des Verstellelements 10 des Toleranzausgleichselements 1 in das Loch 72 erfolgt soweit, bis die federnde Anlagescheibe 50 an der Dachhaut 70 zur Anlage kommt (vgl. Fig. 10). Das Verstellelement 10 steht nun rechtwinklig zur Dachhaut 70. Durch Drehen der Welle 96 des Werkzeugs 90 wird das Basiselement über das Innengewinde 22 in Richtung Traverse 60 ausgefahren. Auf diese Weise wird die Länge des Toleranzausgleichselements 1 mittels Ein- oder Ausschrauben des Verstellelements 10 aus dem Basiselement 20 an den Abstand zwischen dem ersten 60 und zweiten Bauteil 70 angepasst. Dieser Vorgang wird bevorzugt mit einem Schrauber mit Drehmomentabschaltung vorgenommen, da sich bei einem zu großen Drehmoment und einer zu groß eingestellten Länge des Toleranzausgleichselements 1 die Dachhaut 70 verbiegen könnte. Um ein derartiges Verbiegen der Dachhaut 70 zu vermeiden, wird zusätzlich die federnde Anlagescheibe 50 eingesetzt. Da die federnde Anlagescheibe 50 nicht starr ist, erzeugt ein Anlagedruck der Dachhaut 70 an der federnden Anlagescheibe 50 anstelle eines Ausbeulens der Dachhaut 70 ein in Richtung der Längsachse des Toleranzausgleichselements 1 gerichtetes Nachgeben der federnden Anlagescheibe 50. Auf diese Weise wird nicht nur durch die Verwendung eines Schraubers mit Drehmomentabschaltung sondern auch durch den Einsatz der federnden Anlagescheibe 50 eine optimale Installation des Toleranzausgleichselements 1 bereitgestellt.

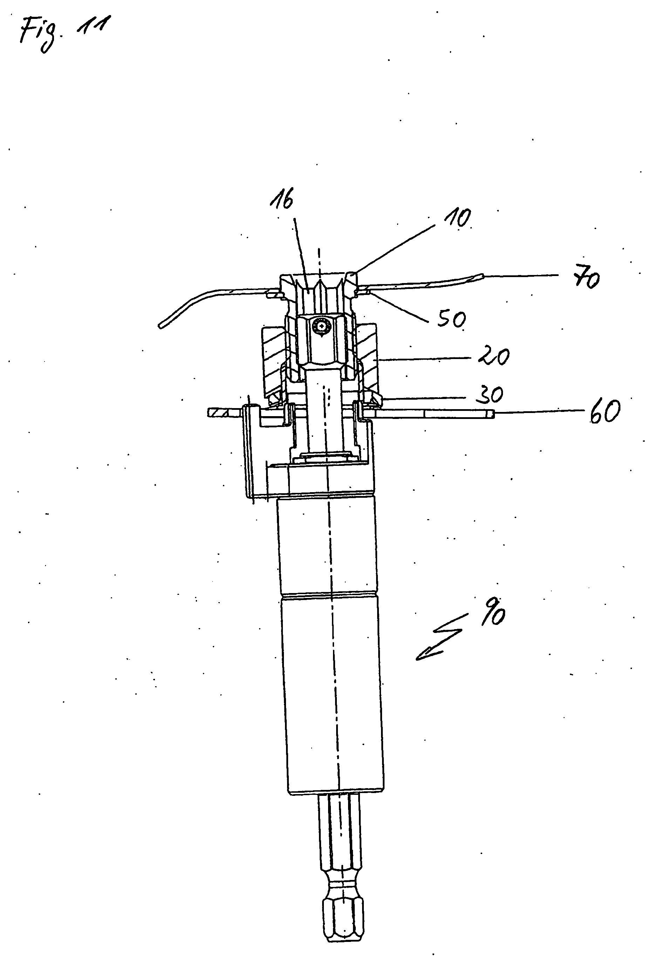

Nachdem gemäß Fig. 11 die Länge des Toleranzausgleichselements 1 angepasst worden ist, liegt das schwimmend gelagerte Aufsatzelement 30 an der Traverse 60 an. Durch diesen Druck der Traverse 60 auf das Aufsatzelement 30 wird sich das ringförmige Kugelsegment 32 in Anlage an der als ringförmiger Abschnitt einer Kugelpfanne ausgebildeten Stirnseite 24 des Basiselements 20 so drehen, dass es an der Traverse 60 vollständig zur Anlage kommt. Während der Installation des Toleranzausgleichselements 1 zwischen der Traverse 60 und der Dachhaut 70 richtet sich somit das Aufsatzelement 30 selbstständig in Bezug auf seine Anlagefläche an der Traverse 60 aus und gleicht dadurch eine nicht parallele Anordnung der sich gegenüberliegenden Flächen von Traverse 60 und Dachhaut 70 aus. Dieses Ausrichten erfolgt über ein radiales Verschieben des Aufsatzelements 30 entlang der Stirnseite 24.

Nach Installation des Toleranzausgleichselements 1 zwischen Traverse 60 und Dachhaut 70 steht das Verstellelement 10 ein definiertes Maß X (vgl. Fig. 10) aus der Dachhaut 70 heraus. Die dann aufgesetzte Dachleiste 80 kann nun von unten mit Hilfe eines Gewindebolzens B und einer Unterlegescheibe U verschraubt werden. Gemäß einer bevorzugten Ausführungsform ist die Dachleiste 80 mit einer spanend hergestellten Gewindebohrung versehen. Es ist jedoch ebenfalls bevorzugt, eine eingenietete Blindnietmutter in der Dachleiste 80 zu verwenden. Die vollständig befestigte Dachleiste 80 ist in Fig. 13 dargestellt. Mit Hilfe des Toleranzausgleichselements 1 entsteht zwischen Dachhaut 70 und Dachleiste 80 aufgrund der Anlagescheibe 50 ein definierter Abstand, so dass die Dachleiste 80 optimal auf der Dachhaut 70 sitzt. Es ist ebenfalls denkbar, Dichtungen zwischen Dachhaut 70 und Dachleiste 80 einzusetzen und mit Hilfe der oben beschriebenen Befestigung definiert vorzuspannen.

## Patentansprüche

1. Toleranzausgleichselement (1) zur Befestigung von Anbauteilen, insbesondere Dachleisten, das die folgenden Merkmale aufweist:
a. ein hohlzylindrisches Verstellelement (10) mit einem Außengewinde (12) an seiner Außenseite,
b. ein hohlzylindrisches Basiselement (20) mit einem Innengewinde (22), in das das Verstellelement (10) einschraubbar ist, so dass Toleranzen in Längsrichtung des Toleranzausgleichselements (1) ausgleichbar sind, **gekennzeichnet durch**
c. ein ringförmiges Aufsatzelement (30), das radial verschiebbar an einer Stirnseite (24) des hohlzylindrischen Basiselements (20) anliegt, so dass aufgrund der Formgebung des Aufsatzelements (30) und/oder der Stirnseite (24) des hohlzylindrischen Basiselements (20) eine winklige Ausrichtung zwischen den Mittelachsen (M20, M30) von Basis- (20) und Aufsatzelements (30) einstellbar ist.

2. Toleranzausgleichselement (1) gemäß Anspruch 1, dessen Stirnseite(24) des hohlzylindrischen Basiselements (20) einen ringförmigen Abschnitt einer Kugelpfanne und das ringförmige Aufsatzelement (30) ein daran angepasstes ringförmiges Kugelsegment (32) aufweisen.

3. Toleranzausgleichselement (1) gemäß Anspruch 1, dessen Aufsatzelement (30) mit Hilfe eines Verbindungsstücks (40) am hohlzylindrischen Basiselement (20) verschiebbar befestigt ist.

4. Toleranzausgleichselement (1) gemäß Anspruch 3, dessen Verbindungsstück (40) mittels Presssitz innerhalb des Basiselements (20) befestigbar ist und über zumindest zwei abgewinkelte Haltearme (42) das Aufsatzelement (30) schwimmend am hohlzylindrischen Basiselement (20) hält.

5. Toleranzausgleichselement (1) gemäß Anspruch 4, dessen Haltearme (42) in Aussparungen (34) des Aufsatzelements (30) angeordnet sind, deren laterale Ausdehnung größer als die der Haltearme (42) ist.

6. Toleranzausgleichselement (1) gemäß Anspruch 1, dessen Verstellelement (10) eine umlaufende Nut (14) aufweist, in der eine federnde Anlagescheibe (50) einrastbar ist, die bei Anlage an einem Bauteil (70) federnd nachgibt.

7. Befestigungsverfahren für ein Anbauteil (80), insbesondere eine Dachleiste, mit Hilfe des Toleranzausgleichselements (1) gemäß einem der Ansprüche 1 bis 6, das die folgenden Schritte aufweist:
a. Anordnen des Toleranzausgleichselements (1) zwischen einem ersten (60) und einem zweiten Bauteil (70),
b. Anpassen der Länge des Toleranzausgleichselements (1) mittels Ein- oder Ausschrauben des Verstellelements (10) aus dem Basiselement (20) an den Abstand zwischen dem ersten (60) und dem zweiten Bauteil (70),
c. Befestigen des Anbauteils (80) mit Hilfe eines das Toleranzausgleichselement (1) durchlaufenden Befestigungsbolzens (B) an dem ersten (60) und zweiten Bauteil (70), **gekennzeichnet durch den weiteren Schritt**
Anpassen der am ersten (60) und zweiten Bauteil (70) jeweils anliegenden Stirnseiten des Toleranzausgleichselements (1) an eine Ausrichtung der sich gegenüberliegenden Flächen beider Bauteile (60, 70) zueinander **durch** radiales Verschieben des Aufsatzelements (30) entlang der dem Aufsatzelement (30) zugewandten Stirnseite (24) des Basiselements (20).

8. Befestigungsverfahren nach Anspruch 7, mit dem weiteren Schritt:
Anpassen der Länge des Toleranzausgleichselements (1) derart, dass die Anlagescheibe (50) federnd vorgespannt am zweiten Bauteil (70) anliegt, ohne das zweite Bauteil (70) zu verformen.

## Claims

1. A tolerance compensation element (1) for fastening attached parts, particularly roof rails, having the following features:
a. a hollow cylinder adjusting element (10) having an external thread (12) on its outer side,
b. a hollow cylinder base element (20) having an internal thread (22), into which the adjustment element (10) can be screwed so that tolerances in the longitudinal direction of the tolerance compensation element (1) can be balanced, **characterized by**
c. a ring-shaped attachment element (30) that rests against a face side (24) of the hollow cylinder base element (20) in a radially displaceable manner, so that due to the shape of the attachment element (30) and/or the face side (24) of the hollow cylinder base element (20) an angular alignment can be adjusted between the central axes (M20, M30) of the base element (20) and the attachment element (30).

2. The tolerance compensation element (1) according to claim 1, whose face side (24) of the hollow cylinder base element (20) has a ring-shaped section of a ball cup, and the ring-shaped attachment element (30) has a ring-shaped spherical segment (32) adapted to it.

3. The tolerance compensation element (1) according to claim 1, whose attachment element (30) is fastened to the hollow cylinder base element (20) in a displaceable manner using a connection piece (40).

4. The tolerance compensation element (1) according to claim 3, whose connection piece (40) can be fastened within the base element (20) by means of interference fit, and retains the attachment element (30) at the hollow cylinder base element (20) in a floating manner by means of at least two angled retaining arms (42).

5. The tolerance compensation element (1) according to claim 4, whose retaining arms (42) are disposed in recesses (34) of the attachment element (30), whose lateral extent is greater than that of the retaining arms (42).

6. The tolerance compensation element (1) according to claim 1, whose adjusting element (10) has a circumferential groove (14), in which a resilient contact disk (50) can be engaged that yields resiliently during contact at a component (70).

7. A fastening method for an attachment part (80), particularly a roof rail, using a tolerance compensation element (1) according to one of the claims 1 to 6 that has the following steps:
a. arranging the tolerance compensation element (1) between a first (60) and a second component (70),
b. adjusting the length of the tolerance compensation element (1) to the distance between the first (60) and the second component (70), by screwing the adjusting element (10) into or out of the base element (20),
c. fastening the attached part (80) to the first (60) and the second component (70) using a fastening bolt (B) penetrating the tolerance compensation element (1), **characterized by the further step**
adjusting each of the face sides of the tolerance compensation element (1) resting against the first (60) and the second component (70) to an alignment of the opposite faces of the two components (60, 70) to each other by a radial displacement of the attachment element (30) along the face side (24) of the base element (20) facing toward the attachment element (30).

8. The fastening method according to Claim 7, with the further step:
adapting the length of the tolerance compensation element (1) so that the contact disk (50) rests against the second component (70) in a resilient pretensioned manner, without deforming the second component (70).

## Revendications

1. Elément d'équilibrage de tolérance (1) pour la fixation de pièces rapportées, en particulier de baguettes de toit, qui présente les caractéristiques suivantes :
a. un élément de réglage (10) cylindrique creux avec un filet extérieur (12) sur son côté extérieur,
b. un élément de base (20) cylindrique creux avec un filet intérieur (22) dans lequel l'élément de réglage (10) peut être vissé de sorte que les tolérances peuvent être équilibrées dans la direction longitudinale de l'élément d'équilibrage de tolérance (1), **caractérisé par**
c. un élément de couronnement (30) de forme annulaire qui est contigu, de façon mobile radialement, à un côté frontal (24) de l'élément de base (20) cylindrique creux de sorte que, du fait de la forme de l'élément de couronnement (30) et/ou du côté frontal (24) de l'élément de base (20) cylindrique creux, un alignement angulaire entre les axes médians (M20, M30) de l'élément de base (20) et de l'élément de couronnement (30) peut être réglé.

2. Elément d'équilibrage de tolérance (1) selon la revendication 1, dont le côté frontal (24) de l'élément de base (20) cylindrique creux présente un tronçon de forme annulaire d'un coussinet sphérique, et dont l'élément de couronnement (30) de forme annulaire présente un segment sphérique (32) de forme annulaire qui lui est adapté.

3. Elément d'équilibrage de tolérance (1) selon la revendication 1, dont l'élément de couronnement (30) est fixé de façon mobile à l'aide d'une pièce de raccordement (40) sur l'élément de base (20) cylindrique creux.

4. Elément d'équilibrage de tolérance (1) selon la revendication 3, dont la pièce de raccordement (40) peut être fixée au moyen d'un ajustement serré à l'intérieur de l'élément de base (20) et qui retient, par le biais d'au moins deux bras de retenue (42) coudés, l'élément de couronnement (30) de façon flottante sur l'élément de base (20) cylindrique creux.

5. Elément d'équilibrage de tolérance (1) selon la revendication 4, dont les bras de retenue (42) sont disposés dans des évidements (34) de l'élément de couronnement (30) dont l'extension latérale est supérieure à celle des bras de retenue (42).

6. Elément d'équilibrage de tolérance (1) selon la revendication 1, dont l'élément de réglage (10) présente une rainure (14) périphérique dans laquelle peut s'enclencher une rondelle de contact (50) élastique qui cède en cas de contact avec un composant (70).

7. Procédé de fixation pour une pièce rapportée (80), en particulier une baguette de toit, à l'aide de l'élément d'équilibrage de tolérance (1) selon une des revendications 1 à 6, qui présente les étapes suivantes.
a. agencement de l'élément d'équilibrage de tolérance (1) entre un premier composant (60) et un deuxième composants (70),
b. adaptation de la longueur de l'élément d'équilibrage de tolérance (1), au moyen du vissage ou du dévissage de l'élément de réglage (10) à partir de l'élément de base (20), à l'intervalle entre le premier composant (60) et le deuxième composant (70).
c. fixation de la pièce rapportée (80), à l'aide d'un boulon de fixation (B) traversant l'élément d'équilibrage de tolérance (1), sur le premier composant (60) et le deuxième composant (70), **caractérisé par la deuxième étape**
l'adaptation du côté frontal, respectivement contigu au premier composant (60) et au deuxième composant (70), de l'élément d'équilibrage de tolérance (1) à une orientation des surfaces opposées des deux composants (60, 70) l'une par rapport à l'autre par déplacement radial de l'élément de couronnement (30) le long du côté frontal (24), tourné vers l'élément de couronnement (30), de l'élément de base (20).

8. Procédé de fixation selon la revendication 7, avec l'étape supplémentaire :
adaptation de la longueur de l'élément d'équilibrage de tolérance (1) de sorte que la rondelle de contact (50) est contiguë, de façon prétendue élastiquement, au deuxième composant (70) sans déformer le deuxième composant (70).
